Europäisches Patentamt

European Patent Office

Office européen des brevets

(11) Veröffentlichungsnummer: **0 436 816 A2**

## (12) EUROPÄISCHE PATENTANMELDUNG

(21) Anmeldenummer: 90122458.4

(51) Int. Cl.5: **G05D 16/06**

(22) Anmeldetag: **26.11.90**

(30) Priorität: **12.01.90 DE 4000694**

(43) Veröffentlichungstag der Anmeldung:
**17.07.91 Patentblatt 91/29**

(84) Benannte Vertragsstaaten:
**DE FR GB IT**

(71) Anmelder: **MESSER GRIESHEIM GMBH**
**Hanauer Landstrasse 330**
**W-6000 Frankfurt/Main 1(DE)**

(72) Erfinder: **Linz, Dieter**
**An der Trinkhalle 11**
**W-6232 Bad Soden(DE)**

(54) Verbindung eines Schliesskörpers mit einer Membran.

(57) Die Erfindung betrifft eine Verbindung eines Schließkörpers (17) mit einer Membran einer Armatur.

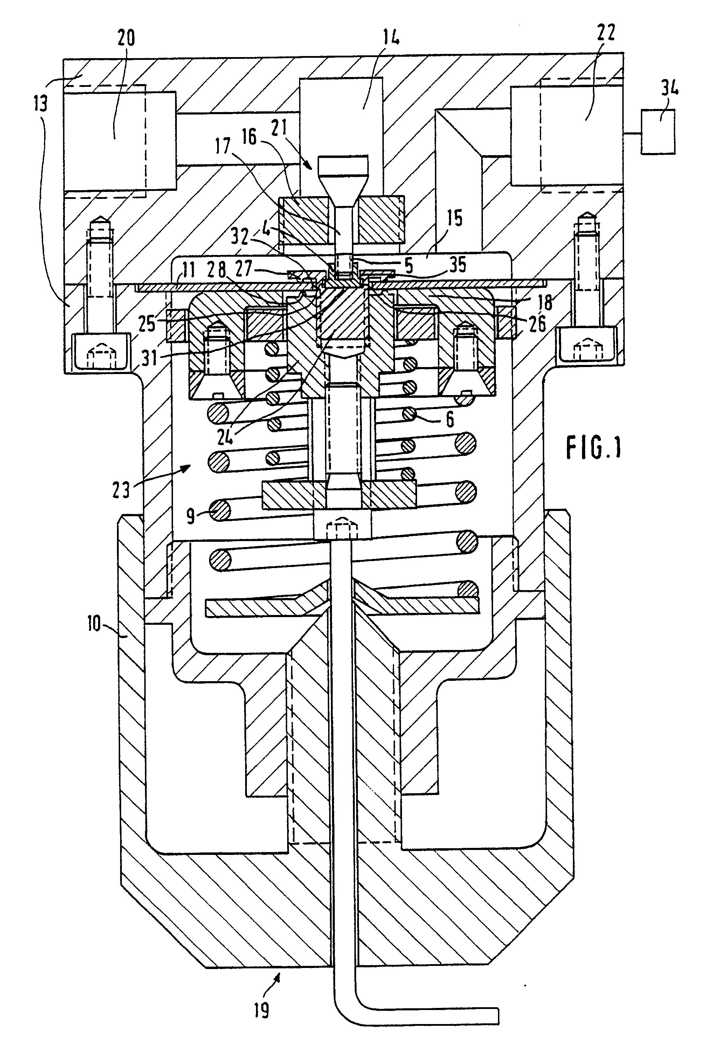

Zur Vermeidung von Undichtheiten bei der Schiefstellung des Schließkörpers (17) wird eine Verbindung über einen an der Membran (11) beweglich geführten flächigen Körper (4) vorgeschlagen (Fig. 1).

FIG.1

# VERBINDUNG EINES SCHLIESSKÖRPERS MIT EINER MEMBRAN

Die Erfindung betrifft eine Verbindung eines Schließkörpers mit einer Membran einer Armatur.

Übliche Armaturen die für die Druckregelung eingesetzt werden, bestehen aus einem Druckreglergehäuse mit Anschlüssen zum Verbinden mit einem Verbraucher und einem Druckgasbehälter. In der im Ventilgehäuse verlaufenden Verbindung zwischen diesen beiden Anschlüssen ist die eigentliche Regeleinrichtung angeordnet, normalerweise ein durch Handrad einstellbares Ventil mit einem mit der Membran festverbundenen Schließkörper. Wenn es bei einer solchen Druckregeleinrichtung durch ungünstige Lagetoleranzen, schiefe Verbindungsmittel oder Montageungenauigkeiten der Membran zu einer Schiefstellung des Schließkörpers des Ventiles kommt, ergeben sich Unregelmäßigkeiten in der Druckregelung.

Es ist schon ein Schließkörper mit einer Kugelgelenkpfanne vorgeschlagen worden, der über ein Kugelgelenk mit Ventilschaft mit einer Membran verbunden ist.

Dabei führt eine Dezentrierung des Schließkörpers bei nacheinander erfolgenden Abdichtzyklen zu unterschiedlichen Dichtrillen zwischen Schließkörper und Ventilsitz. Hierdurch entsteht eine Undichtheit am Druckregelsystem. Hinzu kommt, daß ein Kugelgelenk teuer in der Herstellung und Fertigung ist und die Höhentoleranz zwischen Membran und Schließkörper nicht ausgeglichen werden kann. Die Fertigung eines Kugelgelenkes wird um so schwieriger, je kleiner die Abmessungen des Ventilkörpers mit dem Ventilschaft sind. Um die Funktion zu gewährleisten, müssen zwischen Kugelgelenkpfanne und Kugelgelenk Gleitmittel eingesetzt werden.

Der Erfindung liegt daher die Aufgabe zugrunde, eine Armatur für die Druckregelung zu schaffen, welche gegenüber dem Stand der Technik vereinfacht ist und mit der eine Undichtheit des Druckregelsystemes vermieden wird.

Diese Aufgabe wird erfindungsgemäß durch eine Verbindung eines Schließkörpers mit einer Membran einer Armatur über einen an der Membran beweglich geführten flächigen Körper gelöst.

Vorteilhafte Weiterbildungen der Erfindung sind in den Unteransprüchen angegeben.

Durch die erfindungsgemäße bewegliche Führung des Schließkörpers direkt an der metallischen Membran wird eine Dezentrierung des Schließkörpers durch die Membranlage unmittelbar am Ort der Entstehung korrigiert. Hierdurch werden Dichtrillen vorteilhaft vermieden. Durch die unmittelbare Korrektur der Dezentrierung und die Ausbildung des Schließkörpers als Konus wird vorteilhaft eine Doppelabdichtung vermieden, mit der eine Undichtheit der Druckreglereinrichtung auch bei Drücken um 200 Bar ausgeschlossen werden kann. Die bewegliche Führung arbeitet auch ohne Gleitmittel zuverlässig.

Ein weiterer Vorteil der erfindungsgemäßen Verbindung besteht in der Justierbarkeit der Höhe zwischen Schließkörper und flächigem Körper über ein Bewegungsgewinde. Hierdurch kann das Ventil individuell an vorhandene Toleranzlagen der Einzelteile angepaßt werden.

Besonders vorteilhaft wird die Verbindung nach der Erfindung bei Schließkörpern eingesetzt, die metallisch auf dem Ventilsitz abdichten. Diese Armaturen werden insbesondere bei und oder aggressiven hochreinen Gasen, wie z. B. Flour eingesetzt, die einer Hochdruckgasquelle (bis 200 Bar) entnommen werden. Dabei finden ausschließlich metallische Membranen Verwendung.

Ein Ausführungsbeispiel der Erfindung soll anhand der beigefügten Zeichnungen erläutert werden.

Es zeigen

Fig. 1    eine Druckreglereinrichtung mit erfindungsgemäßer Verbindung des Schließkörpers mit der Membran.

Fig. 2    eine Darstellung der erfindungsgemäßen Verbindung in vergrößertem Maßstab.

Der in der Fig. 1 dargestellte Druckregler 19 besteht im wesentlichen aus einem Druckreglergehäuse 13, in welchem ein prozessgasführender Hochdruckraum 14 und ein prozessgasführender Niederdruckraum 15 angeordnet sind. Der Hochdruckraum 14 ist eingangsseitig über eine Hochdruckleitung 20 mit einer nicht näher dargestellten Hochdruckgasquelle und über ein ansteuerbares Ventil 21 mit dem Niederdruckraum 15 verbunden, an dessen Niederdruckleitung 22 ein Verbraucher 34 angeschlossen ist. Der Niederdruckraum 15 wird durch das Druckreglergehäuse 13 und die metallische Niederdruckmembran 11 begrenzt, die stirnseitig zwischen den beiden Teilen des Druckreglergehäuses gasdicht eingespannt ist. An der Membran 11 ist ein zweiteiliges Stellteil 24 befestigt, dessen im prozessgasfreien Raum angeordnetes Teil mit einer Schließfeder 6 in Wirkverbindung steht. Das zweiteilige Stellteil 24 besteht im wesentlichen aus einem schraubenförmigen Teil, welches durch die Niederdruckmembran 11 hindurchgeführt ist und mit einem Mutterteil verschraubt ist. Über zwei der Niederdruckmembran 11 zugewandte und gegenüberliegende metallische Dichtringe 27, 28 des Stellteiles 24 wird der Niederdruckraum 15 nach der Befestigung des Stellteiles 24 an der Niederdruckmembran 11 gasdicht gegenüber der Durchführungsöffnung 32 abgedichtet. In dem prozessgasfreien Raum 23 ist weiterhin eine an sich bekannte Stellfeder 9 angeordnet, deren Federkraft über ein Einstellelement 10 verändert werden kann. Die Stellfeder 9 wirkt über eine Membranplatte 18 auf die Niederdruckmembran 11 und stellt diese auf den vorgegebenen Druck ein.

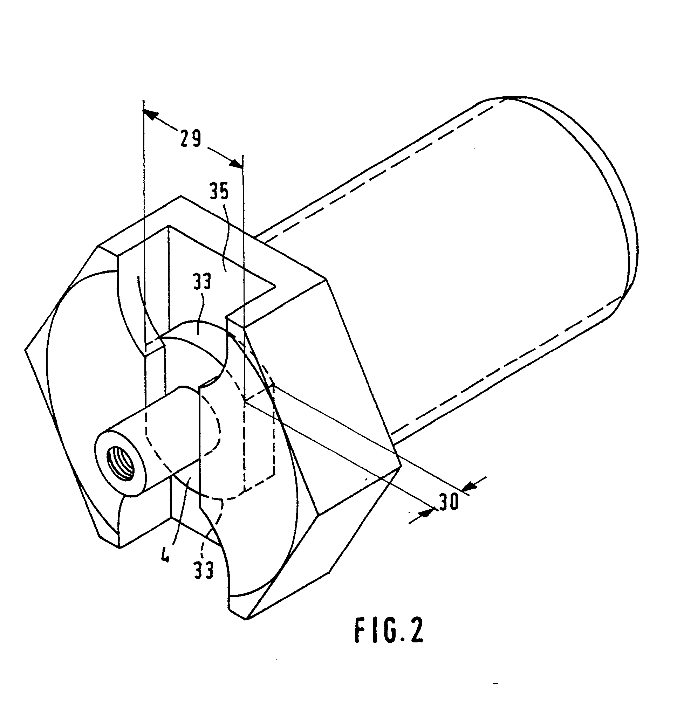

Das zwischen dem Hochdruckraum 14 und dem Niederdruckraum 15 angeordnete Ventil 21 besteht aus einem Ventilsitz 16 und einem Schließkörper 17, der bevorzugt als Konus ausgebildet ist. Der Konus des Schließkörpers 17 geht in einen zylindrischen Teil über, der durch die Öffnung des Ventilsitzes geführt ist. In der unteren Hälfte ist der zylindrische Teil des Schließkörpers 17 mit einem Bewegungsgewinde 5 versehen. Bei einem Durchmesser des zylindrischen Teiles zwischen 1 und 3 Millimetern ist das Bewegungsgewinde fertigungstechnisch herstellbar. Mit dem Bewegungsgewinde wird der Schließkörper 17 in einen flächigen Körper 4 eingeschraubt, der beweglich in dem mit der Niederdruckmembran 11 verbundenen Stellteil 24 geführt ist. In dem Stellteil 24 ist ein der Form des flächigen Körpers 4 angepaßte schlitzförmige Ausnehmung 35 vorgesehen, die den flächigen Körper vorteilhaft an zwei Seiten umgreift. Der flächige Körper 4 kann dabei Abstufungen oder mit einem Innengewinde versehene rohrförmige Teile (Fig. 2) aufweisen.

Der in Fig. 2 näher dargestellte flächige Körper 4 weist eine im wesentlichen rechteckförmige Form auf, dessen Enden 33 abgerundet sind. Durch die halbkreisförmigen, gerundeten Enden 33 wird ein Verkanten des flächigen Körpers 4 bei einer Schiefstellung des Schließkörpers 17 vermieden. Weiterhin weist der flächige Körper 4 eine bis zu 0,5 mm, vorzugsweise bis zu 0,1 mm geringere Dicke 30 als die schlitzförmige Ausnehmung 35 auf, wodurch ein Verklemmen des Körpers 4 in der Ausnehmung 35 ausgeschlossen wird. Der Körper 4 ist nach dem Einschrauben des konischen Schließkörpers 17 innerhalb der Ausnehmung 35 so angeordnet, daß er von dem Boden 31 (Fig. 1) und den Führungsflächen 25, 26 (Fig. 1) der Ausnehmung 35 frei ist. Durch eine vorgegebene Toleranz von 0,5 mm in der Breite 29 zwischen Körper 4 und Ausnehmung 35 kann ein seitlicher Versatz zwischen dem Schließkörper 17 und der Membran ausgeglichen werden. Durch die bewegliche Führung des flächigen Körpers 4 wird das bei der Montage aufgrund der Addition von Toleranzen oder durch den funktionsbedingten einseitigen Kraftangriff der Federn 6 und 9 sonst entstehende Verklemmen, Verkanten oder der seitliche Versatz vorteilhaft vermieden. Ferner werden durch die Erfindung die bei der Montage des Druckreglergehäuses 13 entstehenden Lageverschiebungen zwischen dessen beiden Baueinheiten und der metallischen Niederdruckmembran 11 kompensiert.

## Patentansprüche

1. Verbindung eines Schließkörpers (17) mit einer Memran (11) einer Armatur (19) über einen an der Membran (11) beweglich geführten flächigen Körper (4)

2. Verbindung nach Anspruch 1,
   dadurch gekennzeichnet,
   daß der flächige Körper (4) in einer schlitzförmigen Ausnehmung (35) eines mit der Membran (11) verbundenen Stellteiles (24) beweglich geführt wird.

3. Verbindung nach Anspruch 1 oder 2,
   dadurch gekennzeichnet,
   daß der flächige Körper (4) eine bis zu 0,5 mm, vorzugsweise bis zu 0,1 mm geringere Dicke (30) aufweist, als die schlitzförmige Ausnehmung (35).

4. Verbindung nach einem der Ansprüche 1 bis 3,
   dadurch gekennzeichnet,
   daß der flächige Körper (4) rechteckförmig ausgebildet und an seinen Enden (33) gerundet ist.

5. Verbindung nach einem der Ansprüche 1 bis 4,
   dadurch gekennzeichnet,
   daß der Schließkörper (17) über ein Bewegungsgewinde (5) mit dem flächigen Körper (4) verbunden ist.

6. Verbindung nach einem der Ansprüche 1 bis 5,
   dadurch gekennzeichnet,
   daß der Schließkörper (17) als Konus ausgebildet ist.

FIG.1

FIG.2